# EUROPEAN PATENT APPLICATION

(11) **EP 3 934 386 A1**
(43) Date of publication of application: **05.01.2022**
(21) Application number: 20183583.2
(22) Date of filing: 02.07.2020
(51) Int. Cl.: H05B 45/39, H05B 45/40

(54) **CIRCUITS AND METHODS FOR CONTROLLING LIGHT EMITTING DIODES**

(71) Applicant: Shenzhen Yifengyuan Technology Co. Ltd., Shenzhen, Guangdong 518100 (CN)
(72) Inventor: Wang, Yongbin, Shenzhen, 518045 (CN)
(74) Representative: Sach, Greg Robert

(57) **Abstract**

Light emitting diodes control circuits and method are provided for controlling LEDs. The circuit comprises a microcontroller having a first set of input-output (I/O) pins, a second set of I/O pins and a third set of I/O pins. The circuit also comprises a first set of switches, a second set of switches, a third set of switches, a first line, a second line and a third line. The circuit also comprises a plurality of LEDs including a first LED, a second LED, a third LED, a fourth LED, a fifth LED and a sixth LED. And, the at least one of the plurality of LEDs is illuminated based on a level of the at least two of the first line, the second line and the third line.

## Description

### INTRODUCTION

The present invention generally relates to electronic circuits and more particularly relates to 3-wire 6-ways light emitting diode (LED) control circuit for controlling LEDs.

In general, LEDs are used in decorative lights or in various electronic equipment either for display purposes or to provide an indication to its users. Such vast usage of the LEDs is due to its small size and low cost. When multiple LEDs are used together in any decorative lights or a single equipment, the control of the multiple LEDs is a complex task. In order to control the multiple LEDs, several circuits are available. One such existing circuit is an LED lamp bead, which is pasted on two electronic wires and a third line is used for the return. In this kind of circuit, the driving of only one tunnel is used and can realize various states for the LED including fast or slow flash, increasing brightness and gradually getting darker. Other existing circuits have two electronic wires and another electronic wire as a common wire. The LED is mounted to each of the two electronic wires and the common wire. This existing circuit can only, at most, realize the LED driving method for completing 3 lines, 4 tunnels. However, such circuits are inefficient and do not cater for an effective control of the multiple LEDs. In consideration of such problems, it would be desirable to provide a kind of LED decorative lamp structure on 6 tunnels of 3 lines.

Accordingly, it is desirable to invent a new and novel LED control circuit that works effectively and efficiently to control multiple LEDs. In addition, it is desirable to provide a kind of LED structure on 6-tunnel of 3-wires/lines. Furthermore, other desirable features and characteristics of the present invention will become apparent from the subsequent detailed description of the invention and the appended claims, taken in conjunction with the accompanying drawings and the background of the invention.

### SUMMARY

A light emitting diode (LED) control circuit is provided for illuminating at least one of a plurality of LEDs. The LED control circuit comprises a microcontroller having a first set of input-output (I/O) pins, a second set of I/O pins and a third set of I/O pins. The LED control circuit also comprises a first set of switches, a second set of switches and a third set of switches and a first line, a second line and a third line. The first line is connected in series with the first set of I/O pins through the first set of switches, the second line is connected in series with the second set of I/O pins through the second set of switches, and the third line is connected in series with the third set of I/O pins through the third set of switches. The LED control circuit further comprises at least one of the plurality of LEDs is coupled between at least two of the first line, the second line and the third line. The plurality of LEDs include a first LED, a second LED, a third LED, a fourth LED, a fifth LED and a sixth LED. Also, the at least one of the plurality of LEDs is illuminated based on a level of the at least two of the first line, the second line and the third line. And, the level is one of a high level and a low level.

A method is provided for illuminating at least one of a plurality of light emitting diodes (LEDs). The method comprises the steps of operating a first set of input-output (I/O) pins, a second set of I/O pins and a third set of I/O pins of a microcontroller. The method further comprises the steps of operating a first set of switches, a second set of switches and a third set of switches and enabling at least one of a first line, a second line and a third line to operate in one of a high level and a low level. Also, the first line is connected in series with the first set of I/O pins through the first set of switches, the second line is connected in series with the second set of I/O pins through the second set of switches, and the third line is connected in series with the third set of I/O pins through the third set of switches. The method comprises the steps of illuminating the at least one of the plurality of LEDs coupled between at least two of the first line, the second line and the third line. The plurality of LEDs include a first LED, a second LED, a third LED, a fourth LED, a fifth LED and a sixth LED. Also, the at least one of the plurality of LEDs is illuminated based on the high level or the low level of the at least two of the first line, the second line and the third line.

### BRIEF DESCRIPTION OF THE DRAWINGS

The present invention will hereinafter be described in conjunction with the following drawing figures, wherein like numerals denote like elements, and
FIG. 1 depicts an LED control circuit in accordance with an exemplary embodiment of the invention;
FIG.2 depicts an LED control circuit in accordance with another exemplary embodiment of the invention; and
FIG.3 depicts an exemplary method for illuminating at least one LED in accordance with an exemplary embodiment of the invention.
FIG.4 depicts an exemplary method for illuminating at least one LED in accordance with another exemplary embodiment of the invention.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

While at least one exemplary *aspect* has been presented in the foregoing detailed description of the invention, it should be appreciated that a vast number of variations exist. It should also be appreciated that the exemplary *aspect* or exemplary *aspects* are only examples, and are not intended to limit the scope, applicability, or configuration of the invention in any way. Rather, the foregoing detailed description will provide those skilled in the art with a convenient road map for implementing an exemplary *aspect* of the invention. It being understood that various changes may be made in the function and arrangement of elements described in an exemplary *aspect* without departing from the scope of the invention as set forth in the appended claims.

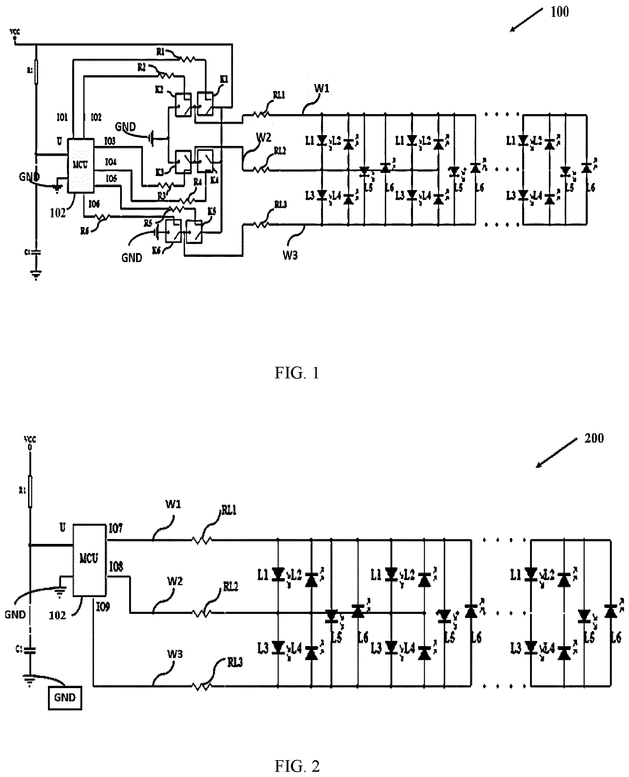

Referring to Figure 1, a three-wire six-way LED control circuit 100 is shown in accordance with an exemplary embodiment of the invention. The LED control circuit 100 comprises, but is not limited to, a microcontroller 102, a set of switches K1, K2, K3, K4, K5 and K6, one or more wires/lines W1, W2 and W3, a plurality of LEDs L1, L2, L3, L4, L5 and L6 and one or more resistors R1, R2, R3, R4, R5, and R6, RL1, RL2, and RL3. Hereinafter, the set of switches are referred as K1-K6, the one or more wires/lines are referred to as W1-W3, the plurality of LEDs are referred to as L1-L6 and the one or more resistors are referred to as R1-R6, and RL1-RL3. In an exemplary embodiment, the switches K1 to K6 may be MOS tubes, a transistor or other switching performance transistor.

As depicted, the microcontroller 102 has a total of eight input-output (referred hereinafter as I/O) pins including a first set of I/O pins, a second set of I/O pins, a third set of I/O pins, and two other pins. The two other pins are connected to a voltage line and an earth line (i.e. grounded) and are coupled to each of a first set of switches, a second set of switches, a third set of switches and the microcontroller 102. In particular, the first set of I/O pins comprises a first I/O pin IO1 and a second I/O pin IO2. The second set of I/O pins comprises a third I/O pin IO3 and a fourth I/O pin IO4 and the third set of I/O pins comprises a fifth I/O pin IO5 and a sixth I/O pin IO6.

Further, the first set of I/O pins is connected in series with the first set of switches, the second set of I/O pins is connected in series with the second set of switches and the third set of I/O pins is connected in series with the third set of switches. The first set of switches comprises a first switch K1 and a second switch K2, the second set of switches comprises a third switch K3 and a fourth switch K4, and the third set of switches comprises a fifth switch K5 and a sixth switch K6. As shown, one terminal of each of the second switch K2, the third switch K3 and the sixth switch K6 is grounded. As seen in FIG.1, the first I/O pin IO1 is connected in series with the first switch K1 via a first resistor R1 and the second I/O pin IO2 is connected in series with the second switch K2 via a second resistor R2. In the same way, the third I/O pin IO3 is connected in series with the third switch K3 via a third resistor R3 and the fourth I/O pin IO4 is connected in series with the fourth switch K4 via a fourth resistor R4. Also, the fifth I/O pin IO5 is connected in series with the fifth switch K5 via a fifth resistor R5 and the sixth I/O pin IO6 is connected in series with the sixth switch K6 via a sixth resistor R6. It can also be seen in FIG. 1 that the first set of switches are connected in series with a first line/wire W1 via a seventh resistor RL1, the second set of switches are connected in series with a second line/wire W2 via an eighth resistor RL2 and the third set of switches are connected in series with a third line/wire W3 via a ninth resistor RL3. Thereby, the first line W1 is connected in series with the first set of I/O pins IO1, IO2 through the first set of switches K1, K2. Similarly, the second line W2 is connected in series with the second set of I/O pins IO3, IO4 through the second set of switches K3, K4 and the third line W3 is connected in series with the third set of I/O pins IO5, IO6 through the third set of switches K5, K6.

Furthermore, the plurality of LEDs L1-L6 shown in FIG. 1 comprises a first LED L1, a second LED L2, a third LED L3, a fourth LED L4, a fifth LED L5 and a sixth LED L6. The first LED L1 and the second LED L2 are coupled in between the first line W1 and the second line W2. Also, the third LED L3 and the fourth LED L4 are coupled in between the second line W2 and the third line W3. Lastly, the fifth LED L5 and the sixth LED L6 are coupled in between the first line W1 and the third line W3. Also, each of the LEDs L1-L6 comprises a positive (+ve) terminal and a negative (-ve) terminal. The connections of each LEDs with respective lines are explained further detail herein. As shown, a positive terminal of the first LED L1 is connected to the first line W1 and a negative terminal of the first LED L1 is connected to the second line W2. Also, a positive terminal of the second LED L2 is connected to the second line W2 and a negative terminal of the second LED L2 is connected to the first line W1. For the third LED L3, a positive terminal is connected to the second line W2 and a negative terminal is connected to the third line W3. For the fourth LED L4, a positive terminal is connected to the third line W3 and a negative terminal is connected to the second line W2. For the fifth LED L5, a positive terminal is connected to the first line W1 and a negative terminal is connected to the third line W3. For the sixth LED L6, a positive terminal is connected to the third line W3 and a negative terminal is connected to the first line W1. As can be seen, each LED L1-L6 are connected in parallel to the lines W1-W3. It is understood for a person skilled in the art that the LEDs are unidirectional in nature and thus, the current only flows from a positive terminal of an LED to a negative terminal of the LED and restricting flow of current in the opposite direction.

When the circuit 100 is turned on, the circuit 100 is configured to operate each of the first I/O pin IO1, the second I/O pin IO2, the third I/O pin IO3, the fourth I/O pin IO4, the fifth I/O pin IO5, and the second I/O pin IO6 in one of a high state, a low state and a suspended state. Based on the state of the I/O pins, the circuit 100 is configured to operate each of the switches K1-K6 in one of an open state and a closed state. Based on the state of the switches K1-K6, the circuit 100 enables the lines W1-W3 to operate in one of a high level and a low level and accordingly, at least one of the plurality of LEDs L1-L6 is illuminated based on the level of any two of the three lines W1-W3. The explanation for illuminating each LED will be explained below in greater details.

In order to illuminate the first LED L1, the microcontroller 102 is configured to operate the first I/O pin IO1 in the low state and the second I/O pin IO2 in the suspended state. In this situation, the current (I) flows from the first I/O pin IO1 to the first switch K1 and no current is available at the second I/O pin IO2. In an event the first I/O pin IO1 is in the low state and the second I/O pin IO2 is in the suspended state, the second switch K2 operates in the open state and the first switch K1 operates in the closed state, which allows the current flowing through the first line W1 via the seventh resistor RL1. In an event the second switch K2 operates in the open state and the first switch K1 operates in the closed state, the first line W1 operates in the high level due to flow of current. Further at the same time, the microcontroller 102 is configured to operate the third I/O pin IO3 in the high state and the fourth I/O pin IO4 in the suspended state. In this situation, the current (I) flows from the third I/O pin IO3 to the third switch K3 and no current is available at the fourth I/O pin IO4. In this event the third I/O pin IO3 is in the high state and the fourth I/O pin IO4 is in the suspended state, the fourth switch K4 operates in the open state and the third switch K3 operates in the closed state, which causes the current to flow to the grounded point of the circuit 100. Due to this, a significantly lower amount of current flows through the second line W2 which would enable the second line W2 to operate in the low level. Such less amount of current in the second line W2 is almost negligible and thereby, voltage V2 across the second line W2 is lesser than voltage V1 across the first line W1. This voltage difference in voltage between the first line W1 and the second line W2 creates a potential difference across the lines W1 and W2. In an event the first line W1 operates in the high level i.e. higher voltage and the second line W2 operates in the low level i.e. lower voltage, the current flows from the first line W1 to the second line W2 resulting in illumination of the first LED L1.

To illuminate the second LED L2, the microcontroller 102 is configured to operate the first I/O pin IO1 in the suspended state and the second I/O pin IO2 in the high state. In this situation, the current (I) flows from the second I/O pin IO2 to the second switch K2 and no current is available at the first I/O pin IO1. At this point, the first switch K1 operates in the open state and the second switch K2 operates in the closed state; however, the current flows through the grounded point of the circuit 100. Due to this, a significantly lower amount of current flows through the first line W1 which would enable the first line W1 to operate in the low level. At the same time, the microcontroller 102 is configured to operate the third I/O pin IO3 in the suspended state and the fourth I/O pin IO4 in the low state. In this situation, the current (I) flows from the fourth I/O pin IO4 to the fourth switch K4 and no current is available at the third I/O pin IO3. At this point, the third switch K3 is operating in the open state and the fourth switch K4 is operating in the closed state causing the current to flow through the second line W2 which would enable the second line W2 to operate in the high level. Therefore, in this case, the voltage V2 across the second line W2 is more than voltage V1 across the first line W1. At this instance, when the first line W1 operates in the low level and the second line W2 operates in the high level, the current flows from the second line W2 to the first line W1 resulting in illumination of the second LED L2.

To illuminate the third LED L3, the microcontroller 102 operates the third I/O pin IO3 in the suspended state and the fourth I/O pin IO4 in the low state. In this situation, the current (I) flows from the fourth I/O pin IO4 to the fourth switch K4 and no current is available at the third I/O pin IO3. At this point, the third switch K3 is operating in the open state and the fourth switch K4 is operating in the closed state causing the current to flow through the second line W2 which would enable the second line W2 to operate in the high level. At the same time, the microcontroller 102 is configured to operate the fifth I/O pin IO5 in the suspended state and the sixth I/O pin IO6 in the high state. In this situation, the current (I) flows from the sixth I/O pin IO6 to the sixth switch K6 and no current is available at the fifth I/O pin IO5. At this point, the fifth switch K5 operates in the open state and the sixth switch K6 operates in the closed state, which causes the current to flow the grounded point of the circuit 100. Due to this, a significantly lower amount of current flows through the third line W3, which would enable the third line W3 to operate in the low level. Such less amount of current in the third line W3 is almost negligible and thereby, voltage V3 across the third line W3 is lesser than voltage V2 across the second line W2. At this instance, when the second line W2 operates in the high level and the third line W3 operates in the low level, the current flows from the second line W2 to the third line W3 resulting in illumination of the third LED L3.

To illuminate the fourth LED L4, the microcontroller 102 is configured to operate the third I/O pin IO3 in the high state and the fourth I/O pin IO4 in the suspended state. In this situation, the current (I) flows from the third I/O pin IO3 to the third switch K3 and no current is available at the fourth I/O pin IO4. At this point, the fourth switch K4 operates in the open state and the third switch K3 operates in the closed state, which causes the current to flow the grounded point of the circuit 100. This would enable the second line W2 to operate in the low level due to a significantly lower amount of current flowing through the second line W2. Also, the microcontroller 102 is configured to operate the fifth I/O pin IO5 in the low state and the sixth I/O pin IO6 in the suspended state. In this situation, the current (I) flows from the fifth I/O pin IO5 to the fifth switch K5 and no current is available at the sixth I/O pin IO6. At this point, the sixth switch K6 operates in the open state and the fifth switch K5 operates in the closed state, which causes the current to flow through the third line W3 enabling the third line W3 to operate in the high level. In this case, voltage V3 across the third line W3 is more than voltage V2 across the second line W2. At this instance, when the second line W2 is in the low level and the third line W3 is operating in the high level, the current flows from the third line W3 to the second line W2 resulting in illumination of the fourth LED L4.

To illuminate the fifth LED L5, the microcontroller 102 is configured to operate the first I/O pin IO1 in the low state and the second I/O pin IO2 in the suspended state. In this situation, the current (I) flows from the first I/O pin IO1 to the first switch K1 and no current is available at the second I/O pin IO2. At this point, the second switch K2 is operating in the open state and the first switch K1 is operating in the closed state, which allows the current flowing through the first line W1 via the seventh resistor RL1. This would enable the first line W1 to operate in the high level due to flow of current. Further at the same, the microcontroller 102 is configured to operate the fifth I/O pin IO5 in the suspended state and the sixth I/O pin IO6 in the high state. In this situation, the current (I) flows from the sixth I/O pin IO6 to the sixth switch K6 and no current is available at the fifth I/O pin IO5. At this point, the fifth switch K5 operates in the open state and the sixth switch K6 operates in the closed state, which causes the current to flow the grounded point of the circuit 100. As very less amount of current flows through the third line W3, the third line W3 is enabled to operate in the low level. Thereby, voltage V3 across the third line W3 is lesser than voltage V1 across the first line W1. At this instance, when the first line W1 operates in the high level and the third line W3 operates in the low level, the current flows from the first line W1 to the third line W3 resulting in illumination of the third LED L5.

To illuminate the sixth LED L6, the microcontroller 102 is configured to operate the first I/O pin IO1 in the suspended state and the second I/O pin IO2 in the high state. In this situation, the current (I) flows from the second I/O pin IO2 to the second switch K2 and no current is available at the first I/O pin IO1. At this point, the first switch K1 operates in the open state and the second switch K2 operates in the closed state; however, the current flows through the grounded point of the circuit 100. Due to this, a significantly lower amount of current flows through the second line W1 which would enable the first line W1 to operate in the low level. At the same time, the microcontroller 102 is configured to operate the fifth I/O pin IO5 in the low state and the sixth I/O pin IO6 in the suspended state. In this situation, the current (I) flows from the fifth I/O pin IO5 to the fifth switch K5 and no current is available at the sixth I/O pin IO6. At this point, the sixth switch K6 operates in the open state and the fifth switch K5 operates in the closed state, which causes the current to flow through the third line W3, which would enable the third line W3 to operate in the high level. In this case, voltage V3 across the third line W3 is more than voltage V1 across the first line W1. At this instance, when the first line W1 in the low level and the third line W3 operates in the high level, the current flows from the third line W3 to the first line W1 resulting in illumination of the sixth LED L6.

As used herein, the term "high level" used for any of the lines W1-W3 refers to a level of current or voltage in a particular line that is enough to glow a particular LED. In an exemplary embodiment, the level of current is up to 5000mA and/or voltage is up to 260 volts when a particular line operates in the high level.

As used herein, the term "low level" used for any of the lines W1-W3 refers to a level of current or voltage in a particular line that is less than the voltage or current when a particular line is in the "high level". In an exemplary embodiment, the level of current is up to 3mA and/or voltage is up to 3 volts when a particular line operates in the low level.

As used herein, the term "high state" for any of the I/O pins IO1-IO6 refers to a state when there is maximum current or voltage output in an I/O pin. In the high state, the I/O pin is enabled. In an exemplary embodiment, the level of current is up to 5000mA and/or voltage is up to 260 volts when a particular I/O pin operates in the high state.

As used herein, the term "low state" used for any of the I/O pins IO1-IO6 refers to a state when there is very low or minimal current or voltage output in an I/O pin. In the low state, the I/O pin is enabled. In an exemplary embodiment, the level of current is up to 3mA and/or voltage is up to 3 volts when a particular I/O pin operates in the low state.

As used herein, the term "suspended state" used for any of the I/O pins IO1-IO6 refers to a state when there is no current or voltage output in an I/O pin. In the suspended state, the I/O is disabled.

As used herein, the term "closed state" or close circuit used for any of the switch K1-K6 refers to a state when a switch allows the current to flow through it. In this closed state, the switch is connected to a respective line or terminals in order to permit the flow of current from any of I/O pins to the respective line.

As used herein, the term "open state" or open circuit used for any of the switch K1-K6 refers to a state when a switch does not allow the current to flow through it. In this open state, the switch is not connected to a respective line in order to restrict the flow of current from any of I/O pins to the respective line.

The explanation provided above for illuminating each LED L1-L6 of FIG. 1 is also captured in an exemplary Table 1 provided below for ease of understanding. The full form of each abbreviations used in the Table 1 is as follows: S resembles Suspended state, L resembles Low state/level, H resembles High state/level, O resembles Open state and C resembles Closed state.

**Table 1**

| **IO1** | **IO2** | **IO3** | **IO4** | **IO5** | **IO6** | **K1** | **K2** | **K3** | **K4** | **K5** | **K6** | **Level of Line** | **Illumi nated LED** |
|---|---|---|---|---|---|---|---|---|---|---|---|---|---|
| L | S | | | | | C | O | | | | | L1-H | L1 |
| | | H | S | | | | | C | O | | | L2-L | |
| S | H | | | | | O | C | | | | | L1-L | L2 |
| | | S | L | | | | | O | C | | | L2-H | |
| | | S | L | | | | | O | C | | | L2-H | L3 |
| | | | | S | H | | | | | O | C | L3-L | |
| | | H | S | | | | | C | O | | | L2-L | L4 |
| | | | | L | S | | | | | C | O | L3-H | |
| L | S | | | | | C | O | | | | | L1-H | L5 |
| | | | | S | H | | | | | O | C | L3-L | |
| S | H | | | | | O | C | | | | | L1-L | L6 |
| | | | | L | S | | | | | C | O | L3-H | |

Although FIG. 1 describes only one possible combination of a state of I/O pins, a state of switches, and a level of lines for illuminating each of the LEDs L1-L6; however, it is understood for a person skilled in the art that other possible combinations of the state of I/O pins, the state of switches, and the level of lines for illuminating the LEDs L1-L6 are also within the scope of the present invention for illuminating an LED. As an example, the exemplary Table 1 above shows that the first switch K1 is in the closed state only when the first I/O pin IO1 is in low state. However, the first switch K1 can also be in the closed state by operating the first I/O pin IO1 in the high state as well. The present invention also encompasses such other changes in the state of I/O pins, the state of switches, and the level of lines. Therefore, the closed state of the first switch K1 is achieved by operating the first I/O pin IO1 in one of the low state and the high state and the closed state of the second switch K2 is achieved by operating the second I/O pin IO2 in one of the low state and the high state. Similarly, the third switch K3 is achieved by operating the third I/O pin IO3 in one of the low state and the high state and the fourth switch K4 is achieved by operating the fourth I/O pin IO4 in one of the low state and the high state. Likewise, the fifth switch K5 is achieved by operating the fifth I/O pin IO5 in one of the low state and the high state and the sixth switch K6 is achieved by operating the sixth I/O pin IO6 in one of the low state and the high state. In the same way, the open state of the first switch K1 is achieved by operating the first I/O pin 101 in the suspended state and the open state of the second switch K2 is achieved by operating the second I/O pin IO2 in the suspended state. Also, the third switch K3 is achieved by operating the third I/O pin IO3 in the suspended state and the fourth switch K4 is achieved by operating the fourth I/O pin IO4 in the suspended state. Lastly, the fifth switch K5 is achieved by operating the fifth I/O pin IO5 in the suspended state and the sixth switch K6 is achieved by operating the sixth I/O pin IO6 in the suspended state.

In a different exemplary embodiment, an exemplary Table 2 is provided below for illuminating the plurality of LEDs L1-L6. The exemplary Table 2 below depicts a state of I/O pins, a state of switches, and a level of lines for illuminating the LEDs L1-L6 which is different from the states of each I/O pins, switches and lines level as provided in exemplary Table 1 above. The full form of the abbreviations used in the Table 2 is same explained above for Table 1.

**Table 2**

| **IO1** | **IO2** | **IO3** | **IO4** | **IO5** | **IO6** | **K1** | **K2** | **K3** | **K4** | **K5** | **K6** | **Level of Line** | **Illumi nated LED** |
|---|---|---|---|---|---|---|---|---|---|---|---|---|---|
| H | S | | | | | C | O | | | | | L1-H | L1 |
| | | L | S | | | | | C | O | | | L2-L | |
| S | L | | | | | O | C | | | | | L1-L | L2 |
| | | S | H | | | | | O | C | | | L2-H | |
| | | S | H | | | | | O | C | | | L2-H | L3 |
| | | | | S | L | | | | | O | C | L3-L | |
| | | L | S | | | | | C | O | | | L2-L | L4 |
| | | | | H | S | | | | | C | O | L3-H | |
| H | S | | | | | C | O | | | | | L1-H | L5 |
| | | | | S | L | | | | | O | C | L3-L | |
| S | L | | | | | O | C | | | | | L1-L | L6 |
| | | | | H | S | | | | | C | O | L3-H | |

Referring to FIG. 2, a three-wire six-way LED control circuit 200 is shown in accordance with another exemplary embodiment of the invention. The LED control circuit 200 comprises, but is not limited to, a microcontroller (MCU) 102, one or more lines W1-W3, a plurality of LEDs L1-L6 and one or more resistors RL1-RL3. As depicted, the microcontroller 102 has a total of five I/O pins including a first I/O pin IO7, a second I/O pin 108, a third I/O pin IO9 and two other pins. These two other pins are being connected to an earth line (i.e. grounded) and a voltage line. In this circuit 200, the first I/O pin IO7 is directly connected in series with a first line W1 via a first resistor RL1, the second I/O pin IO8 is directly connected in series with a second line W2 via a second resistor RL2 and the third I/O pin IO9 is directly connected in series with a third line W3 via a third resistor RL3. Thereby, the circuit 200 provide an MCU integrated output. Further, the plurality of LEDs L1-L6 shown in FIG. 2 comprises a first LED L1, a second LED L2, a third LED L3, a fourth LED L4, a fifth LED L5 and a sixth LED L6. These LEDs L1-L6 of FIG 2 are connected in the same manner and in the same direction as shown in FIG. 1.

To illuminate the first LED L1, the microcontroller 102 is configured to operate the first I/O pin IO7 in the high state and the second I/O pin IO8 in the low state. In an event the first I/O pin IO7 is in the high state and the second I/O pin IO8 is in the low state, the first line W1 is enabled to operate in the high level and the second line W2 is enabled to operate in the low level. In an event the first line W1 operates in the high level and the second line W2 operates in the low level, voltage V1 at the first line W1 is more than voltage V2 at the second line W2. Thereby the first LED L1 is illuminated as the current flows from the first line W1 to the second line W2 due to potential difference between these two lines W1, W2.

To illuminate the second LED L2, the microcontroller 102 is configured to operate the first I/O pin IO7 in the low state and the second I/O pin IO8 in the high state enabling the first line W1 operating in the low level and the second line W2 operating in the high level. At this stage, voltage V1 at the first line W1 is less than voltage V2 at the second line W2. Thereby, the second LED L2 is illuminated as the current flows from the second line W2 to the first line W1.

To illuminate the third LED L3, the microcontroller 102 is configured to operate the second I/O pin IO8 in the high state and the third I/O pin IO9 in the low state enabling the second line W2 operating in the high level and the third line W3 operating in the low level. At this stage, voltage V2 at the second line W2 is more than voltage V3 at the third line W3. Thereby, the third LED L3 is illuminated as the current flows from the second line W2 to the third line W3.

To illuminate the fourth LED L4, the microcontroller 102 is configured to operate the second I/O pin IO8 in the low state and the third I/O pin IO9 in the high state enabling the second line W2 operating in the low level and the third line W3 operating in the high level. At this stage, voltage V2 at the second line W2 is less than voltage V3 at the third line W3. Thereby, the fourth LED L4 is illuminated as the current flows from the third line W3 to the second line W2.

To illuminate the fifth LED L5, the microcontroller 102 is configured to operate the first I/O pin IO7 in the high state and the third I/O pin IO9 in the low state enabling the first line W1 operating in the high level and the third line W3 operating in the low level. At this stage, voltage V1 at the first line W1 is more than voltage V3 at the third line W3. Thereby, the fifth LED L5 is illuminated as the current flows from the first line W1 to the third line W3.

To illuminate the sixth LED L6, the microcontroller 102 is configured to operate the first I/O pin IO7 in the low state and the third I/O pin IO9 in the high state enabling the first line W1 operating in the low level and the third line W3 operating in the high level. At this stage, voltage V1 at the first line W1 is less than voltage V3 at the third line W3. Thereby, the sixth LED L6 is illuminated as the current flows from the third line W3 to the first line W1.

The explanation provided above for illuminating each LED L1-L6 of FIG. 2 is captured in an exemplary Table 3 below for ease of understanding. The full form of each abbreviations used in the Table 3 is as follows: L means Low and H means High.

**Table 3**

| **IO7** | **IO8** | **IO9** | **LED illuminated** |
|---|---|---|---|
| H | L | | L1 |
| L | H | | L2 |
| | H | L | L3 |
| | L | H | L4 |
| H | | L | L5 |
| L | | H | L6 |

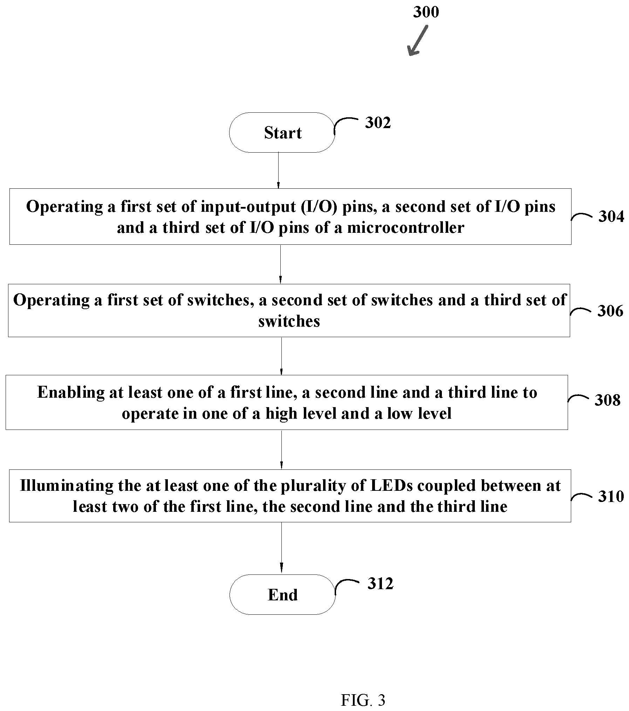

Referring to FIG. 3, a method 300 for illuminating at least one of a plurality of LEDs L1- L6 in accordance with an exemplary embodiment of the invention. The method 300 starts at step 302.

At step 304, a first set of I/O pins (IO1, IO2), a second set of I/O pins (IO3, IO4) and a third set of I/O pins (IO5, IO6) of a microcontroller 102 are operated. As explained above, each of the I/O pins IO1-IO6 are operated in one of a high state, a low state and a suspended state.

At step 306, a circuit 100 operates a first set of switches (K1, K2), a second set of switches (K3, K4) and a third set of switches (K5, K6) in one of an open state and a closed state.

At step 308, the circuit 100 enables at least one of a first line W1, a second line W2 and a third line W3 to operate in one of a low state and a high state. Further, the first line W1 is connected in series with the first set of I/O pins (IO1, IO2) through the first set of switches (K1, K2) and the second line W2 is connected in series with the second set of I/O pins (IO3, IO4) through the second set of switches (K3, K4). Also, the third line W3 is connected in series with the third set of I/O pins (IO5, IO6) through the third set of switches (K5, K6).

At step 310, the circuit 100 illuminates the at least one of the plurality of LEDs L1-L6 coupled between at least two of the first line, the second line and the third line. Also, the at least one of the plurality of LEDs L1-L6 is illuminated based on a level of the at least two of the first line W1, the second line W2 and the third line W3. The level of a particular line is one of a high level and a low level. Illumination of each of the plurality of LEDs L1-L6 is explained above in the description of FIG. 1. At step 312, the method 300 ends.

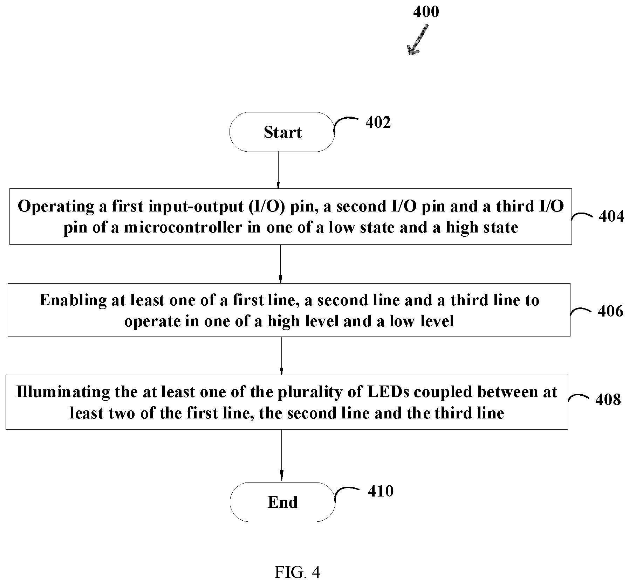

Referring to FIG. 4, a method 400 for illuminating at least one of a plurality of LEDs L1- L6 in accordance with another exemplary embodiment of the invention. The method 400 starts at step 402.

At step 404, a first I/O pin IO7, a second I/O pin IO8 and a third I/O pin IO9 of a microcontroller 102 operate in one of a low state or a high state.

At step 406, a circuit 200 enables at least one of a first line W1, a second line W2 and a third line W3 to operate in one of a high level and a low level. Further, the first line W1 is connected in series with the first I/O pin IO7, the second line W2 is connected in series with the second I/O pin IO8 and the third line W3 is connected in series with the third I/O pin IO9 as shown in Figure 2.

At step 408, the circuit 100 illuminates the at least one of the plurality of LEDs L1-L6 coupled between at least two of the first line, the second line and the third line. Also, the at least one of the plurality of LEDs L1-L6 is illuminated based on the high level or the low level of the at least two of the first line W1, the second line W2 and the third line W3. Illumination of each of the plurality of LEDs L1-L6 is explained above in the description of FIG.2. At step 410, the method 400 ends.

The present invention mentions that the plurality of LEDs L1-L6 include the first LED L1, the second LED L2, the third LED L3, the fourth LED L4, the fifth LED L5 and the sixth LED L6. Each of the first LED L1, the second LED L2, the third LED L3, the fourth LED L4, the fifth LED L5 and the sixth LED L6 can be a single LED (i.e. 1 in number) or is included in a group of LEDs, wherein a plurality of the groups of LEDs are provided in the LED control circuit 100/200. In a non-limiting embodiment, as depicted in FIG. 1 and FIG. 2, there are in total three first LED L1, three second LED L2, three third LED L3, three fourth LED L4, three fifth LED L5 and three sixth LED L6. In the similar manner, there can be two, four, five or six number of each LED L1-L6 which can be connected in the same way. The scaling up or down of the number of LEDs depends on the requirements and is within the scope of the present invention.

In an exemplary embodiment of the present invention, the first LED L1, the second LED L2, the third LED L3, the fourth LED L4, the fifth LED L5 and the sixth LED L6 glow one at a time or one after another. In a different exemplary embodiment of the present invention, all of the first LED L1, the second LED L2, the third LED L3, the fourth LED L4, the fifth LED L5 and the sixth LED L6 glow simultaneously at the same time.

The present invention has industry applicability in the field of electronic equipment, where an LED can be used as a control light such as in a remote control of the electronic equipment. Additionally, the present invention is applicable in firework lights, meteor lights, marquee lights, billboards, fairy and decorative LED lights, battery box light string, a control machine of solar light, a control machine of solar light series, a control machine of universal serial bus (USB) and several of transformer AC to DC external control.

The present invention provides several technical advantages over the prior systems or circuits which are as follows: a) Effective and efficient control of multiple LEDs by using 3-wire 6-way combination of light beads, b) provides different embodiments for realizing 3-wire 6-way circuits, and c) 3-wire 6-way LED circuit is used for realizing different flickering modes resulting in improved viewing effect.

Further statements of invention:
1. A light emitting diode (LED) control circuit for illuminating at least one of a plurality of LEDs, the circuit comprising:
   - a microcontroller having a first input-output (I/O) pin, a second I/O pin and a third I/O pin configured to operate in one of a low state and a high state;
   - a first line, a second line and a third line, wherein
      the first line is connected in series with the first I/O pin,
      the second line is connected in series with the second I/O pin, and
      the third line is connected in series with the third I/O pin; and
   - at least one of the plurality of LEDs is coupled between at least two of the first line, the second line and the third line, wherein
      the plurality of LEDs include a first LED, a second LED, a third LED, a fourth LED, a fifth LED and a sixth LED,
      at least one of the plurality of LEDs is illuminated based on a level of the at least two of the first line, the second line and the third line, and
      the level is one of a high level and a low level.
2. The light emitting diode (LED) control circuit according to item 1, wherein each of the plurality of LEDs comprises a positive terminal and a negative terminal.
3. The light emitting diode (LED) control circuit according to item 2, wherein
   the positive terminal and the negative terminal of the first LED is coupled to the first line and the second line, respectively,
   the positive terminal and the negative terminal of the second LED is coupled to the second line and the first line, respectively,
   the positive terminal and the negative terminal of the third LED is coupled to the second line and the third line, respectively,
   the positive terminal and the negative terminal of the fourth LED is coupled to the third line and the second line, respectively,
   the positive terminal and the negative terminal of the fifth LED is coupled to the first line and the third line, respectively, and
   the positive terminal and the negative terminal of the sixth LED is coupled to the third line and the first line, respectively.
4. The light emitting diode (LED) control circuit according to item 1, further comprising at least one input voltage line and an earth line coupled to the microcontroller.
5. The light emitting diode (LED) control circuit according to item 1, wherein each of the first LED, the second LED, the third LED, the fourth LED, the fifth LED and the sixth LED is included in a group of LEDs, and wherein a plurality of the groups of LEDs are provided in the LED control circuit.
6. The light emitting diode (LED) control circuit according to item 1, wherein
   the first LED is illuminated in an event
   the first line is in the high level and the second line is in the low level, and
   the first I/O pin operates in the high state and the second I/O pin operates in the low state,
   the second LED is illuminated in an event
   the first line is in the low level and the second line is in the high level, and
   the first I/O pin operates in the low state and the second I/O pin operates in the high state,
   the third LED is illuminated in an event
   the second line is in the high level and the third line is in the low level, and
   the second I/O pin operates in the high state and the third I/O pin operates in the low state,
   the fourth LED is illuminated in an event
   the second line is in the low level and the third line is in the high level, and
   the second I/O pin operates in the low state and the third I/O pin operates in the high state,
   the fifth LED is illuminated in an event
   the first line is in the high level and the third line is in the low level, and
   the first I/O pin operates in the high state and the third I/O pin operates in the low state, and
   the sixth LED is illuminated in an event
   the first line is in the low level and the third line is in the high level, and
   the first I/O pin operates in the low state and the third I/O pin operates in the high state.
7. A method for illuminating at least one of a plurality of light emitting diodes (LEDs), the method comprising:
   - operating a first input-output (I/O) pin, a second I/O pin and a third I/O pin of a microcontroller in one of a low state and a high state;
   - enabling at least one of a first line, a second line and a third line to operate in one of a high level and a low level, wherein
      the first line is connected in series with the first I/O pin,
      the second line is connected in series with the second I/O pin, and
      the third line is connected in series with the third I/O pin; and
   - illuminating the at least one of the plurality of LEDs coupled between at least two of the first line, the second line and the third line, wherein
      the plurality of LEDs include a first LED, a second LED, a third LED, a fourth LED, a fifth LED and a sixth LED, and
      the at least one of the plurality of LEDs is illuminated based on the high level or the low level of the at least two of the first line, the second line and the third line.
8. The method according to item 7, wherein each of the plurality of LEDs comprises a positive terminal and a negative terminal.
9. The method according to item 8, wherein
   the positive terminal and the negative terminal of the first LED is coupled to the first line and the second line, respectively,
   the positive terminal and the negative terminal of the second LED is coupled to the second line and the first line, respectively,
   the positive terminal and the negative terminal of the third LED is coupled to the second line and the third line, respectively,
   the positive terminal and the negative terminal of the fourth LED is coupled to the third line and the second line, respectively,
   the positive terminal and the negative terminal of the fifth LED is coupled to the first line and the third line, respectively, and
   the positive terminal and the negative terminal of the sixth LED is coupled to the third line and the first line, respectively.
10. The method according to item 7, further comprising at least one input voltage line and an earth line coupled to the microcontroller.
11. The method according to item 7, wherein each of the first LED, the second LED, the third LED, the fourth LED, the fifth LED and the sixth LED is included in a group of LEDs, and wherein a plurality of the groups of LEDs are provided in the LED control circuit.
12. The method according to item 7, wherein
   the first LED is illuminated in an event
      the first line is in the high level and the second line is in the low level, and
      the first I/O pin operates in the high state and the second I/O pin operates in the low state,
   the second LED is illuminated in an event
      the first line is in the low level and the second line is in the high level, and
      the first I/O pin operates in the low state and the second I/O pin operates in the high state,
   the third LED is illuminated in an event
      the second line is in the high level and the third line is in the low level, and
      the second I/O pin operates in the high state and the third I/O pin operates in the low state,
   the fourth LED is illuminated in an event
      the second line is in the low level and the third line is in the high level, and
      the second I/O pin operates in the low state and the third I/O pin operates in the high state,
   the fifth LED is illuminated in an event
      the first line is in the high level and the third line is in the low level, and
      the first I/O pin operates in the high state and the third I/O pin operates in the low state, and
   the sixth LED is illuminated in an event
      the first line is in the low level and the third line is in the high level, and
      the first I/O pin operates in the low state and the third I/O pin operates in the high state.

## Claims

1. A light emitting diode (LED) control circuit for illuminating at least one of a plurality of LEDs, the circuit comprising:
- a microcontroller having a first set of input-output (I/O) pins, a second set of I/O pins and a third set of I/O pins;
- a first set of switches, a second set of switches and a third set of switches;
- a first line, a second line and a third line, wherein
the first line is connected in series with the first set of I/O pins through the first set of switches,
the second line is connected in series with the second set of I/O pins through the second set of switches, and
the third line is connected in series with the third set of I/O pins through the third set of switches; and
- at least one of the plurality of LEDs is coupled between at least two of the first line, the second line and the third line, wherein
the plurality of LEDs include a first LED, a second LED, a third LED, a fourth LED, a fifth LED and a sixth LED,
at least one of the plurality of LEDs is illuminated based on a level of the at least two of the first line, the second line and the third line, and
the level is one of a high level and a low level.

2. The light emitting diode (LED) control circuit according to claim 1, wherein
the first set of I/O pins comprises a first I/O pin and a second I/O pin,
the second set of I/O pins comprises a third I/O pin and a fourth I/O pin, and
the third set of I/O pins comprises a fifth I/O pin and a sixth I/O pin.

3. The light emitting diode (LED) control circuit according to claim 1, wherein
the first set of switches comprises a first switch and a second switch,
the second set of switches comprises a third switch and a fourth switch, and
the third set of switches comprises a fifth switch and a sixth switch.

4. The light emitting diode (LED) control circuit according to claim 1, wherein each of the plurality of LEDs comprises a positive terminal and a negative terminal.

5. The light emitting diode (LED) control circuit according to claim 4, wherein
the positive terminal and the negative terminal of the first LED is coupled to the first line and the second line, respectively,
the positive terminal and the negative terminal of the second LED is coupled to the second line and the first line, respectively,
the positive terminal and the negative terminal of the third LED is coupled to the second line and the third line, respectively,
the positive terminal and the negative terminal of the fourth LED is coupled to the third line and the second line, respectively,
the positive terminal and the negative terminal of the fifth LED is coupled to the first line and the third line, respectively, and
the positive terminal and the negative terminal of the sixth LED is coupled to the third line and the first line, respectively.

6. The light emitting diode (LED) control circuit according to claim 1, further comprising at least one input voltage line and an earth line coupled to each of the first set of switches, the second set of switches, the third set of switches and the microcontroller.

7. The light emitting diode (LED) control circuit according to claim 1, wherein each of the first LED, the second LED, the third LED, the fourth LED, the fifth LED and the sixth LED is included in a group of LEDs, and wherein a plurality of the groups of LEDs are provided in the LED control circuit.

8. A method for illuminating at least one of a plurality of light emitting diodes (LEDs), the method comprising:
- operating a first set of input-output (I/O) pins, a second set of I/O pins and a third set of I/O pins of a microcontroller;
- operating a first set of switches, a second set of switches and a third set of switches;
- enabling at least one of a first line, a second line and a third line to operate in one of a high level and a low level, wherein
the first line is connected in series with the first set of I/O pins through the first set of switches,
the second line is connected in series with the second set of I/O pins through the second set of switches, and
the third line is connected in series with the third set of I/O pins through the third set of switches; and
- illuminating the at least one of the plurality of LEDs coupled between at least two of the first line, the second line and the third line, wherein
the plurality of LEDs include a first LED, a second LED, a third LED, a fourth LED, a fifth LED and a sixth LED, and
the at least one of the plurality of LEDs is illuminated based on the high level or the low level of the at least two of the first line, the second line and the third line.

9. The method according to claim 8, wherein
the first set of I/O pins comprises a first I/O pin and a second I/O pin,
the second set of I/O pins comprises a third I/O pin and a fourth I/O pin,
the third set of I/O pins comprises a fifth I/O pin and a sixth I/O pin, and each of the first I/O pin, the second I/O pin, the third I/O pin, the fourth I/O pin, the fifth I/O pin, and the sixth I/O pin are configured to operate in one of a high state, a low state and a suspended state.

10. The method according to claim 8, wherein
the first set of switches comprises a first switch and a second switch,
the second set of switches comprises a third switch and a fourth switch,
the third set of switches comprises a fifth switch and a sixth switch, and
each of the first switch, the second switch, the third switch, the fourth switch, the fifth switch, and the sixth switch are configured to operate in one of an open state and a closed state.

11. The method according to claim 9 and claim 10, wherein
the closed state of at least one of:
the first switch is achieved by operating the first I/O pin in one of the low state and the high state,
the second switch is achieved by operating the second I/O pin in one of the low state and the high state,
the third switch is achieved by operating the third I/O pin in one of the low state and the high state,
the fourth switch is achieved by operating the fourth I/O pin in one of the low state and the high state,
the fifth switch is achieved by operating the fifth I/O pin in one of the low state and the high state, and
the sixth switch is achieved by operating the sixth I/O pin in one of the low state and the high state, and
the open state of at least one of:
the first switch is achieved by operating the first I/O pin in the suspended state,
the second switch is achieved by operating the second I/O pin in the suspended state,
the third switch is achieved by operating the third I/O pin in the suspended state,
the fourth switch is achieved by operating the fourth I/O pin in the suspended state,
the fifth switch is achieved by operating the fifth I/O pin in the suspended state, and
the sixth switch is achieved by operating the sixth I/O pin in the suspended state.

12. The method according to claim 8, wherein each of the plurality of LEDs comprises a positive terminal and a negative terminal.

13. The method according to claim 8 and claim 12, wherein
the first LED is illuminated in an event
the first line is in the high level and the second line is in the low level, and
the positive terminal and the negative terminal of the first LED is coupled to the first line and the second line, respectively,
the second LED is illuminated in an event
the second line is in the high level and the first line is in the low level, and
the positive terminal and the negative terminal of the second LED is coupled to the second line and the first line, respectively,
the third LED is illuminated in an event
the second line is in the high level and the third line is in the low level, and
the positive terminal and the negative terminal of the third LED is coupled to the second line and the third line, respectively,
the fourth LED is illuminated in an event
the third line is in the high level and the second line is in the low level, and
the positive terminal and the negative terminal of the fourth LED is coupled to the third line and the second line, respectively,
the fifth LED is illuminated in an event
the first line is in the high level and the third line is in the low level, and
the positive terminal and the negative terminal of the fifth LED is coupled to the first line and the third line, respectively, and
the sixth LED is illuminated in an event
the third line is in the high level and the first line is in the low level,
the positive terminal and the negative terminal of the sixth LED is coupled to the third line and the first line, respectively.

14. The method according to claim 9 and claim 10, wherein
the first line is in the high level in an event:
the first I/O pin is in the low state and the second I/O pin is in the suspended state, and
the first switch is in the closed state and the second switch is in the open state.
the first line is in the low level in an event:
the first I/O pin is in the suspended state and the second I/O pin is in the high state, and
the first switch is in the open state and the second switch is in the closed state.
the second line is in the high level in an event:
the third I/O pin is in the suspended state and the fourth I/O pin is in the low state, and
the third switch is in the open state and the fourth switch is in the closed state, the second line is in the low level in an event:
the third I/O pin is in the high state and the fourth I/O pin is in the suspended state, and
the third switch is in the closed state and the fourth switch is in the open state, the third line is in the high level in an event:
the fifth I/O pin is in low state and the sixth I/O pin is in the suspended state, and
the fifth switch is in the closed state and the sixth switch is in the open state, and
the third line is in the low level in an event:
the fifth I/O pin is in the suspended state and the sixth I/O pin is in the high state, and
the fifth switch is in the open state and the sixth switch is in the closed state.

15. A light emitting diode (LED) control circuit for illuminating at least one of a plurality of LEDs, the circuit comprising:
- a microcontroller having a first input-output (I/O) pin, a second I/O pin and a third I/O pin configured to operate in one of a low state and a high state;
- a first line, a second line and a third line, wherein
the first line is connected in series with the first I/O pin,
the second line is connected in series with the second I/O pin, and
the third line is connected in series with the third I/O pin; and
- at least one of the plurality of LEDs is coupled between at least two of the first line, the second line and the third line, wherein
the plurality of LEDs include a first LED, a second LED, a third LED, a fourth LED, a fifth LED and a sixth LED,
at least one of the plurality of LEDs is illuminated based on a level of the at least two of the first line, the second line and the third line, and
the level is one of a high level and a low level.
